# EUROPEAN PATENT APPLICATION

(11) **EP 4 593 495 A1**
(43) Date of publication of application: **30.07.2025**
(21) Application number: 23881218.4
(22) Date of filing: 30.05.2023
(51) Int. Cl.: H04W 72/1268, H04W 72/04, H04W 74/08

(54) **COOPERATIVE TRANSMISSION METHOD AND RELATED APPARATUS**

(30) Priority: 27.10.2022 CN 202211330322
(71) Applicant: Huawei Technologies Co., Ltd., Shenzhen, Guangdong 518129 (CN)
(72) Inventor: GUO, Yuchen, Shenzhen, Guangdong 518129 (CN); GAN, Ming, Shenzhen, Guangdong 518129 (CN); LI, Yunbo, Shenzhen, Guangdong 518129 (CN)
(74) Representative: Maiwald GmbH
(86) International application number: PCT/CN2023/097267
(87) International publication number: WO 2024/087627

(57) **Abstract**

A cooperative transmission method and a related apparatus are provided. The method is applicable to a wireless local area network system that supports a next-generation Wi-Fi protocol of IEEE 802.11ax (for example, the 802.11be protocol), a next-generation Wi-Fi protocol of 802.11be, or the like; and may be further applicable to a UWB technology-based wireless personal area network system, a sensing system, and the like. The method includes: After receiving a trigger frame from a first network device, a terminal device determines a NAV, where the NAV indicates that a channel status is busy, and the NAV is set by a first AP; and performs uplink transmission with the first network device when a preset condition is met, where the first AP is an AP that shares a transmission opportunity, the first network device is a network device with which the transmission opportunity is shared. The terminal device ignores the NAV set by the first AP, and performs uplink transmission by using the transmission opportunity shared by the first AP. This helps improve resource utilization.

## Description

This application claims priority to Chinese Patent Application No. 202211330322.3, filed with the China National Intellectual Property Administration on October 27, 2022 and entitled "COOPERATIVE TRANSMISSION METHOD AND RELATED APPARATUS", which is incorporated herein by reference in its entirety.

### TECHNICAL FIELD

This application relates to the communication field, and in particular, to a cooperative transmission method and a related apparatus.

### BACKGROUND

With development of internet technologies, deployment of network devices has become increasingly dense; consequently, inter-cell interference is intensified. The inter-cell interference can be reduced through cooperation between the network devices. For example, after a network device #1 obtains a transmission opportunity (transmit opportunity, TXOP), if the network device #1 does not fully use the TXOP of the network device #1, the network device #1 may share remaining time in the TXOP with another network device (for example, a network device #2) for transmission.

When the network device #1 shares a part of time of the transmission opportunity with the network device #2, the network device #2 sends a trigger frame to a terminal device associated with the network device #2, to trigger the terminal device to perform uplink transmission. However, because a network allocation vector (net allocation vector, NAV) is set by the network device #1 for the terminal device, the terminal device may not be able to respond to the trigger frame sent by the network device #2, that is, the terminal device cannot perform uplink transmission. In this case, transmission resources are idle in this period of time, and resource utilization is low.

### SUMMARY

This application provides a cooperative transmission method and a related apparatus, to improve resource utilization.

According to a first aspect, this application provides a cooperative transmission method. The method may be performed by a terminal device, may be performed by a component (for example, a chip or a chip system) configured in the terminal device, or may be implemented by a logical module or software that can implement all or a part of functions of the terminal device. This is not limited in this application.

It should be noted that, in this application, a first network device is a network device with which a transmission opportunity is shared in cooperative transmission, and a second network device is a network device that shares the transmission opportunity with the first network device. In the following descriptions, an example in which the second network device is a first wireless access point (access point, AP) and an example in which the first network device includes a second AP or includes a second AP and a station (station) co-located with the second AP are used to describe the cooperative transmission method provided in this application.

It should be understood that the first network device and the second network device each may alternatively be another type of network device. This is not limited in this application.

For example, the method includes: receiving a trigger frame from the first network device, where the trigger frame is used to trigger the terminal device to perform uplink transmission, and the first network device is the network device with which the transmission opportunity is shared in cooperative transmission; determining a NAV, where the NAV indicates that a channel status is busy, the NAV is set by the first AP, and the first AP is an AP that shares the transmission opportunity with the first network device in cooperative transmission; and performing uplink transmission with the first network device when a preset condition is met.

In the foregoing technical solution, after receiving the trigger frame from the first network device, the terminal device determines the NAV set by the first AP. Even if the NAV indicates that the channel status is busy, as long as the preset condition is met, the terminal device may perform uplink transmission with the first network device, in other words, the terminal device may ignore the NAV set by the first AP, and successfully respond to the trigger frame from the first network device. In this way, the terminal device successfully performs uplink transmission with the first network device. This helps improve resource utilization.

Three possible designs of the preset condition are as follows:
In a first possible design, the preset condition includes: first indication information is received from the first network device, where the first indication information indicates the terminal device to ignore the NAV set by the first AP, or the first indication information indicates the terminal device to ignore a NAV.

The first indication information may be carried in the trigger frame from the first network device.

The first indication information may indicate the terminal device to ignore the NAV set by the first AP. In other words, even if the NAV set by the first AP indicates that the channel status is busy, the terminal device may also respond to the trigger frame sent by the first network device, and perform uplink transmission with the first network device.

The first indication information may further indicate the terminal device to ignore a NAV. In this case, the terminal device may not only ignore the NAV set by the first AP, but also ignore a NAV set by another AP or station. Even if a current NAV indicates that the channel status is busy, the terminal device may also respond to the trigger frame sent by the first network device, and perform uplink transmission with the first network device.

In a second possible design, the preset condition includes: a pre-stored medium access control (medium access control, MAC) address of a transmission opportunity holder (TXOP holder) is the same as a MAC address of the first AP.

In this possible design, the terminal device further needs to determine the MAC address of the first AP.

In a possible implementation, the trigger frame further carries an identifier of the first AP, and the terminal device determines the MAC address of the first AP based on the identifier of the first AP and a pre-stored mapping relationship between the identifier of the first AP and the MAC address of the first AP. For example, the terminal device may receive the mapping relationship between the identifier of the first AP and the MAC address of the first AP from the first network device in advance, and store the mapping relationship, so that after receiving the identifier of the first AP, the terminal device may determine the MAC address of the first AP based on the mapping relationship.

In another possible implementation, the terminal device obtains a response frame sent by the first network device, where the response frame carries the MAC address of the first AP, the response frame is used to respond to a transmission opportunity sharing frame sent by the first AP, and the transmission opportunity sharing frame indicates that the first AP shares the transmission opportunity with the first network device; and obtains the MAC address of the first AP from the response frame.

The response frame sent by the first network device to respond to the transmission opportunity sharing frame sent by the first AP carries the MAC address of the first AP, and the terminal device may monitor the response frame and obtain the MAC address of the first AP from the response frame.

Optionally, the first network device includes the second AP, or the first network device includes the second AP and the station.

When the first network device includes the second AP, the first AP may send the transmission opportunity sharing frame to the second AP, and the second AP sends the response frame to the first AP. When the first network device includes the second AP and the station, the first AP may send the transmission opportunity sharing frame to the second AP, and the second AP sends the response frame to the first AP; or the first AP may send the transmission opportunity sharing frame to the station, and the station sends the response frame to the first AP.

Optionally, the transmission opportunity sharing frame is a multi-user request to send (multi-user request to send, MU-RTS) frame, the MU-RTS frame includes a preset field, and the preset field indicates that the first AP shares the transmission opportunity with the second AP in the first network device.

For that the first AP shares the transmission opportunity with the first network device, in a possible case, the transmission opportunity may be used for communication between the second AP and a terminal device associated with the second AP; and in another possible case, the transmission opportunity may be used for communication between the second AP and a terminal device associated with the second AP, and may be used for communication between the station in the first network device and the terminal device or communication between the station in the first network device and the first AP. In this application, the preset field may indicate that the first AP shares the transmission opportunity with the second AP in the first network device. In other words, the transmission opportunity may be used for communication between the second AP and the terminal device associated with the second AP.

In a third possible design, the preset condition includes: the NAV is an intra-basic service set (basic service set, intra-BSS) NAV.

It may be understood that, it is specified in a protocol that, after receiving the trigger frame, if the terminal device needs to determine whether the channel status is busy or idle, the terminal device may determine only whether a basic (basic) NAV is not 0, and does not need to determine whether the intra-BSS NAV is not 0. Therefore, in this application, the NAV set by the first AP is set to the intra-BSS NAV. After receiving the trigger frame, the terminal device may ignore the NAV set by the firstAP, and successfully perform uplink transmission with the first network device.

In this design, the terminal device may set the NAV in the following manner: After receiving a radio frame from the first AP, if the radio frame indicates the terminal device to set the NAV, the terminal device further determines whether the first AP is an AP in a pre-stored cooperation set; and if the first AP is the AP in the pre-stored cooperation set, determines the NAV as the intra-BSS NAV.

Optionally, the cooperation set may be sent by the first network device to the terminal device in advance, so that after receiving the radio frame, the terminal device determines whether a transmit end of the radio frame belongs to the cooperation set.

According to a second aspect, this application provides a cooperative transmission method. The method may be performed by a first network device, may be performed by a component (for example, a chip or a chip system) configured in the first network device, or may be implemented by a logical module or software that can implement all or a part of functions of the first network device. This is not limited in this application.

For example, the method includes: sending a trigger frame to a terminal device, where the trigger frame is used to trigger the terminal device to perform uplink transmission, the trigger frame carries first indication information, the first indication information indicates the terminal device to ignore a NAV set by a first AP, the first network device is a network device with which a transmission opportunity is shared in cooperative transmission, and the first AP is an AP that shares the transmission opportunity in cooperative transmission; and receiving uplink data from the terminal device.

In the foregoing technical solution, the first network device sends the trigger frame to the terminal device, to trigger the terminal device to perform uplink transmission. The trigger frame carries the first indication information, to indicate the terminal device to ignore the NAV set by the first AP. In other words, even if the NAV set by the first AP indicates that a channel status is busy, the terminal device may also respond to the trigger frame sent by the first network device, and perform uplink transmission with the first network device. In this way, the terminal device may perform uplink transmission with the first network device by using a period of time shared by the first AP. This helps improve resource utilization.

Optionally, the first indication information further indicates the terminal device to ignore a NAV.

The first indication information may further indicate the terminal device to ignore a NAV. In this case, the terminal device may not only ignore the NAV set by the first AP, but also ignore a NAV set by another AP or station. In this way, even if a current NAV indicates that the channel status is busy, the terminal device may also respond to the trigger frame sent by the first network device, and perform uplink transmission with the first network device. This helps improve the resource utilization.

According to a third aspect, this application provides a cooperative transmission method. The method may be performed by a first network device, may be performed by a component (for example, a chip or a chip system) configured in the first network device, or may be implemented by a logical module or software that can implement all or a part of functions of the first network device. This is not limited in this application.

For example, the method includes: sending a trigger frame to a terminal device, where the trigger frame is used to trigger the terminal device to perform uplink transmission, the trigger frame carries an identifier of a first AP, the identifier of the first AP is used by the terminal device to determine that a NAV stored in the terminal device is a NAV set by the first AP, the first network device is a network device with which a transmission opportunity is shared in cooperative transmission, and the first AP is an AP that shares the transmission opportunity in cooperative transmission; and receiving uplink data from the terminal device.

In the foregoing technical solution, the first network device sends the trigger frame to the terminal device, to trigger the terminal device to perform uplink transmission. The trigger frame carries the identifier of the first AP, and the identifier of the first AP is used by the terminal device to determine that the NAV stored in the terminal device is the NAV set by the first AP. In other words, when the NAV stored in the terminal device is the NAV set by the first AP, the terminal device may ignore the NAV, respond to the trigger frame sent by the first network device, and perform uplink transmission with the first network device. In this way, the terminal device may perform uplink transmission with the first network device by using a period of time shared by the first AP. This helps improve resource utilization.

According to a fourth aspect, this application provides a cooperative transmission method. The method may be performed by a first AP, may be performed by a component (for example, a chip or a chip system) configured in the first AP, or may be implemented by a logical module or software that can implement all or a part of functions of the first AP. This is not limited in this application.

For example, the method includes: sending a transmission opportunity sharing frame to a first network device, where the transmission opportunity sharing frame indicates that the first AP shares a transmission opportunity with a second AP in the first network device, the first network device is a network device with which the transmission opportunity is shared in cooperative transmission, and the first AP is an AP that shares the transmission opportunity in cooperative transmission; and receiving a response frame from the first network device.

In the foregoing technical solution, the first AP may send the transmission opportunity sharing frame to the first network device, to indicate that the first AP shares the transmission opportunity with the second AP in the first network device. In other words, the second AP in the first network device may communicate, based on the transmission opportunity shared by the first AP, with a terminal device associated with the second AP. In this way, the second AP can quickly obtain a transmission resource for transmission. This helps reduce a communication delay of the second AP.

According to a fifth aspect, this application provides a communication apparatus, to implement the method according to any one of the first aspect to the fourth aspect and the possible implementations of the first aspect to the fourth aspect. The apparatus includes a corresponding unit configured to perform the foregoing method. The unit included in the apparatus may be implemented by software and/or hardware.

According to a sixth aspect, this application provides a communication apparatus. The apparatus includes a processor. The processor is coupled to a memory, and may be configured to execute a computer program in the memory, to implement the method according to any one of the first aspect to the fourth aspect and the possible implementations of the first aspect to the fourth aspect.

Optionally, the apparatus further includes the memory.

Optionally, the apparatus further includes a communication interface, and the processor is coupled to the communication interface.

According to a seventh aspect, this application provides a computer-readable storage medium. The computer-readable storage medium stores a computer program or instructions. When the computer program or the instructions are executed, the method according to any one of the first aspect to the fourth aspect or possible implementations of the first aspect to the fourth aspect is implemented.

According to an eighth aspect, this application provides a computer program product. The computer program product includes instructions. When the instructions are run, the method according to any one of the first aspect to the fourth aspect and the possible implementations of the first aspect to the fourth aspect is implemented.

According to a ninth aspect, this application provides a chip system. The chip system includes at least one processor, configured to support implementation of a function in any one of the first aspect to the fourth aspect and the possible implementations of the first aspect to the fourth aspect, for example, receiving or processing data in the foregoing method.

In a possible design, the chip system further includes a memory, the memory is configured to store program instructions and data, and the memory is located inside or outside the processor.

The chip system may include a chip, or may include a chip and another discrete component.

According to a tenth aspect, this application further provides a chip. The chip includes a processor and a communication interface. The processor reads, through the communication interface, instructions stored in a memory, to perform the method according to any one of the first aspect to the fourth aspect or the possible implementations of the first aspect to the fourth aspect.

It should be understood that, technical solutions of the fifth aspect to the tenth aspect of this application correspond to technical solutions of the first aspect to the fourth aspect of this application, and beneficial effect achieved in the aspects and corresponding feasible implementations are similar. Details are not described again.

### BRIEF DESCRIPTION OF DRAWINGS

FIG. 1 is a diagram of a network architecture of a communication system applicable to a method according to an embodiment of this application;
FIG. 2 is a schematic flowchart of a cooperative transmission method according to an embodiment of this application;
FIG. 3 is a diagram of a sending process of each frame according to an embodiment of this application;
FIG. 4 is a block diagram of a communication apparatus according to an embodiment of this application;
FIG. 5 is another block diagram of a communication apparatus according to an embodiment of this application; and
FIG. 6 is a diagram of a structure of a terminal device according to an embodiment of this application.

### DESCRIPTION OF EMBODIMENTS

The following describes technical solutions of this application with reference to accompanying drawings.

To facilitate understanding of embodiments of this application, the following descriptions are first provided.

First, to clearly describe the technical solutions in embodiments of this application, terms such as "first" and "second" are used in embodiments of this application to distinguish between same items or similar items that provide basically same functions and purposes. For example, a first AP and a second AP are merely used for distinguishing between different APs, and a sequence thereof is not limited. A person skilled in the art may understand that the terms such as "first" and "second" do not limit a quantity or an execution sequence, and the terms such as "first" and "second" do not indicate a definite difference.

Second, in embodiments of this application, "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between associated objects, but does not exclude an "and" relationship between the associated objects. A specific meaning represented by the character "/" may be understood with reference to the context. "One or more of the following items (pieces)" or a similar expression thereof means any combination of these items (pieces), including any combination of singular items (pieces) or plural items (pieces). For example, one or more of a, b, or c may represent the following cases: a, b, c, a and b, a and c, b and c, or a, b and c. a, b, and c may be singular or plural.

Third, in embodiments of this application, the term "example", "for example", or the like is used to represent giving an example, an illustration, or a description. Any embodiment or design scheme described with "example" or "for example" in embodiments of this application should not be explained as being more preferred or having more advantages than another embodiment or design scheme. Exactly, use of the term "example", "for example", or the like is intended to present a relative concept in a specific manner.

The technical solutions provided in this application may be applied to a wireless local area network (wireless local area network, WLAN) system, an ultra-wideband (ultra-wideband, UWB) technology-based wireless personal area network system, and a sensing (sensing) system; and may be further applied to a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a sidelink (sidelink) communication system, a universal mobile telecommunication system (universal mobile telecommunication system, UMTS), a worldwide interoperability for microwave access (worldwide interoperability for microwave access, WiMAX) communication system, a 5th generation (5th generation, 5G) mobile communication system, or a new radio access technology (new radio access technology, NR) system. The 5G mobile communication system may include non-standalone (non-standalone, NSA) networking and/or standalone (standalone, SA) networking. The technical solutions provided in this application may be further applied to a future communication system, for example, a 6th generation (6th Generation, 6G) mobile communication system. This is not limited in this application.

In this application, a network device may be any device having a wireless transceiver function. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an AP in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in a 5G (for example, NR) system, or one antenna panel or one group of antenna panels (including a plurality of antenna panels) of a base station in a 5G system. Alternatively, the network device may be a network node, for example, a baseband unit (BBU) or a distributed unit (distributed unit, DU), that constitutes a gNB or a transmission point.

Optionally, a first network device and a second network device each may be, for example, the foregoing network device. In addition, in this application, the network device may include an AP and a station co-located with the AP. Co-location may be understood as that the AP and the station are two logical entities in the network device, and are deployed in a same physical device.

In this application, a terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity for a user, for example, a handheld device or a vehicle-mounted device that has a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs.

In addition, the terminal device may alternatively be a terminal device in an internet of things (internet of things, IoT) system. IoT is an important component in development of future information technologies. A main technical feature of IoT is to connect an object to a network by using a communication technology, to implement an intelligent network of human-machine interconnection and thing-thing interconnection. An IoT technology can achieve massive connections, deep coverage, and terminal power saving by using, for example, a narrowband (narrowband, NB) technology.

It should be understood that specific forms of the first network device, the second network device, and the terminal device are not limited in this application.

It should be further understood that a method provided in this application is applicable to a next-generation Wi-Fi protocol of institute of electrical and electronics engineers (institute of electrical and electronics engineers, IEEE) 802.11ax, for example, a next-generation standard IEEE 802.11be (also referred to as Wi-Fi 7 or extremely high throughput (extremely high throughput, EHT protocol)); and may be further applicable to a next-generation Wi-Fi protocol of 802.11be, or the like, for example, Wi-Fi 8, UHR, or Wi-Fi AI. This is not limited in this application.

To better understand a cooperative transmission method provided in embodiments of this application, terms used in this application are first briefly described.
1. Time division multiple access (time division multiple access, TDMA) means that devices use a same frequency and occupy a channel in turn for transmission in terms of time. In this application, cooperative transmission (which may also be referred to as coordinative transmission, joint transmission, or the like) may be performed between network devices based on TDMA. For example, after a network device #1 obtains a TXOP, if the network device #1 does not fully use the TXOP of the network device #1, the network device #1 may share remaining time in the TXOP with another network device (for example, a network device #2) for transmission. For example, the network device is an AP. After an AP #1 obtains a TXOP, if the AP #1 does not fully use the TXOP of the AP #1, the AP #1 may share remaining time in the TXOP with another AP for transmission. The AP that shares the transmission opportunity may be referred to as a sharing (sharing) AP, and the another AP with which the transmission opportunity is shared may be referred to as a shared (shared) AP.
2. A TXOP is a basic unit for wireless channel access, and the TXOP is a time interval. After obtaining the TXOP, a network device may transmit one or more data frames on a channel within the time interval.
3. A NAV is a time interval. In the time interval, a terminal device considers that a channel status is busy, and therefore does not perform channel access or data transmission. In embodiments of this application, after a terminal device detects a radio frame, if the radio frame carries related information of a NAV, the terminal device updates a NAV stored in the terminal device, where an updated NAV takes a larger value of the NAV stored in the terminal device and the NAV carried in the radio frame.

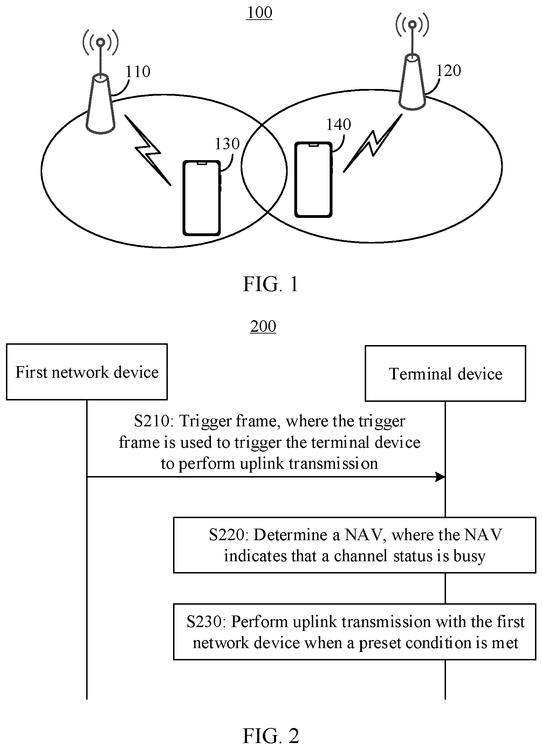

To facilitate understanding of embodiments of this application, a communication system applicable to embodiments of this application is described in detail below with reference to FIG. 1.

FIG. 1 is a diagram of a network architecture of a communication system 100 applicable to a method according to an embodiment of this application.

As shown in FIG. 1, the communication system 100 may include at least two network devices, such as a network device 110 and a network device 120 shown in FIG. 1. Each network device may provide communication coverage for a specific geographical area, and may perform radio link communication with a terminal device located in the coverage area (cell). The network device 110 shown in FIG. 1 may perform radio link communication with a terminal device 130, and the network device 120 may perform radio link communication with a terminal device 140.

Optionally, the terminal device 130 and the terminal device 140 may be mobile or fixed. This is not limited in this application.

Optionally, the communication system shown in the communication system 100 may include more network devices, and coverage of each network device may include another quantity of terminal devices. This is not limited in this embodiment of this application.

In the communication system shown in FIG. 1, the network device 110 and the network device 120 may perform cooperative transmission, to reduce inter-cell interference. For example, after obtaining a TXOP, the network device 110 performs data transmission. When the network device 110 does not fully use the TXOP of the network device 110, the network device 110 may share remaining time in the TXOP with the network device 120 for use. When the network device 110 shares a part of time of the TXOP with the network device 120, the network device 120 sends a trigger frame to the terminal device 140 associated with the network device 120, to trigger the terminal device 140 to perform uplink transmission. However, because a NAV is set by the network device 110 for the terminal device 140, the terminal device 140 may not be able to respond to the trigger frame sent by the network device 120, that is, the terminal device 140 cannot perform uplink transmission. In this case, transmission resources are idle in this period of time, and resource utilization is low.

To improve resource utilization, this application provides a cooperative transmission method. The method includes: After receiving a trigger frame from a first network device, a terminal device determines a NAV set by a second network device. The NAV indicates that a channel status is busy. When a preset condition is met, the terminal device performs uplink transmission with the first network device, in other words, the terminal device may ignore the NAV set by the second network device, and directly respond to the trigger frame without considering the channel status indicated by the NAV set by the second network device. In this way, the terminal device successfully performs uplink transmission with the first network device. This helps improve the resource utilization.

It should be understood that, a scenario in which the first network device is a network device with which a transmission opportunity is shared in cooperative transmission and the second network device is a network device that shares the transmission opportunity with the first network device is used as an example for description below. However, this should not constitute any limitation on embodiments of this application. For example, the method provided in this application may be further applicable to another scenario, for example, a scenario in which the second network device and the first network device do not share a transmission opportunity. After receiving a trigger frame from the first network device, the terminal device determines a NAV. The NAV indicates that a channel is busy. When a preset condition is met, the terminal device performs uplink transmission with the first network device, in other words, the terminal device ignores a NAV set by the second network device, and successfully responds to the trigger frame from the first network device. For more detailed descriptions, refer to the following embodiments.

It should be further understood that, in the following descriptions, an example in which the second network device is a first AP and an example in which the first network device includes a second AP or includes a second AP and a station co-located with the second AP are used to describe in detail the cooperative transmission method provided in this application. The first network device and the second network device each may alternatively be another type of network device described above. This is not limited in this application.

The following describes in detail the cooperative transmission method provided in embodiments of this application with reference to the accompanying drawings. It should be understood that, in the following embodiments, the method is described from a perspective of interaction between the first network device and the terminal device, but this should not constitute any limitation on an execution body of the method. The method provided in embodiments of this application can be performed provided that a program that records code of the method provided in embodiments of this application can be run. For example, the terminal device may alternatively be replaced with a component (for example, a chip or a chip system) configured in the terminal device, or another functional module that can invoke a program and execute the program; and the first network device may alternatively be replaced with a component (for example, a chip or a chip system) configured in the first network device, or another functional module that can invoke a program and execute the program. This is not limited in embodiments of this application.

FIG. 2 is a schematic flowchart of a cooperative transmission method 200 according to an embodiment of this application. The cooperative transmission method 200 shown in FIG. 2 may include S210 to S230. The following describes in detail steps in the method 200.

S210: A first network device sends a trigger frame to a terminal device, where the trigger frame is used to trigger the terminal device to perform uplink transmission. Correspondingly, the terminal device receives the trigger frame from the first network device.

The first network device is a network device with which a transmission opportunity is shared, and the first network device may include a second AP or include a second AP and a station. The terminal device is a terminal device that is in communication connection to the first network device.

Optionally, the trigger frame may be a basic trigger frame (basic trigger frame), and is used to trigger the terminal device to perform uplink transmission. The trigger frame may alternatively be an MU-RTS trigger frame, and is used to determine whether a channel of the terminal device is idle. The trigger frame may alternatively be a multi-user bandwidth query report poll (MU bandwidth query report poll, MU-BQRP) trigger frame, and is used to query for an idle channel of the terminal device.

For example, the second AP in the first network device sends the trigger frame to the terminal device, to trigger the terminal device to perform uplink transmission. Correspondingly, the terminal device receives the trigger frame from the second AP.

Optionally, before the first network device sends the trigger frame to the terminal device, the method further includes: The first network device receives a transmission opportunity sharing frame from a first AP, where the transmission opportunity sharing frame indicates that the first AP shares the transmission opportunity with the first network device. The first network device sends a response frame to the first AP, where the response frame is used to respond to the transmission opportunity sharing frame.

In this application, that the first AP shares the transmission opportunity with the first network device means that the first AP shares a period of time in the transmission opportunity with the first network device for transmission.

In a possible case, the first network device includes the second AP. In this case, the first AP sends the transmission opportunity sharing frame to the second AP, where the transmission opportunity sharing frame indicates that the first AP shares the transmission opportunity with the second AP for transmission. Correspondingly, the second AP sends the response frame to the first AP.

In another possible case, the first network device includes the second AP and the station co-located with the second AP. In this case, the first AP may send the transmission opportunity sharing frame to the second AP, where the transmission opportunity sharing frame indicates that the first AP shares the transmission opportunity with the second AP for transmission. Correspondingly, the second AP sends the response frame to the first AP. The first AP may alternatively send the transmission opportunity sharing frame to the station, where the transmission opportunity sharing frame indicates that the first AP shares the transmission opportunity with the second AP for transmission. Correspondingly, the station sends the response frame to the first AP. That the second AP and the station are co-located may be understood as that the second AP and the station are two logical entities in the first network device, and are deployed in a same physical device. In this case, the station may notify, to the second AP, that the first AP shares the transmission opportunity of the first AP with the second AP, so that the second AP sends the trigger frame to the terminal device.

Optionally, the transmission opportunity sharing frame may be an MU-RTS frame, and the response frame may be a clear to send (clear to send, CTS) frame.

It may be understood that, for that the first AP shares the transmission opportunity with the first network device, in a possible case, the transmission opportunity may be used for communication between the second AP and a terminal device associated with the second AP; and in another possible case, the transmission opportunity may be used for communication between the second AP and a terminal device associated with the second AP, and may be used for communication between the station in the first network device and the terminal device or communication between the station in the first network device and the first AP.

In this application, the MU-RTS frame may include a preset field, to indicate that the first AP shares the transmission opportunity with the second AP in the first network device. In other words, the transmission opportunity may be used for communication between the second AP and the terminal device associated with the second AP.

A "triggered TXOP sharing mode" field is used as an example. For example, a value 3 of the field indicates that the first AP shares the transmission opportunity with the second AP in the first network device. In other words, the transmission opportunity may be used for communication between the second AP and the terminal device associated with the second AP.

For another example, a value 2 of the field indicates that the first AP shares the transmission opportunity with the second AP in the first network device, and further indicates that the first AP shares the transmission opportunity with the station in the first network device. In other words, the transmission opportunity may be used for communication between the second AP and the terminal device associated with the second AP, and may also be used for communication between the station in the first network device and the terminal device or communication between the station in the first network device and the first AP. How the first network device allocates the transmission opportunity to the second AP and the station is not limited in this application. For example, a period of time in the transmission opportunity may be used for communication between the second AP and the terminal device associated with the second AP, and another period of time may be used for communication between the station in the first network device and the terminal device or communication between the station in the first network device and the first AP.

S220: The terminal device determines a NAV, where the NAV indicates that a channel status is busy.

The NAV is a NAV set by the first AP. For example, after receiving the trigger frame from the first network device, the terminal device determines a NAV stored in the terminal device, where the NAV is set by the first AP, and the NAV indicates that the channel status is busy.

Before receiving the trigger frame from the first network device, the terminal device may alternatively receive a radio frame from the first AP, and set the NAV based on the radio frame.

S230: Perform uplink transmission with the first network device when a preset condition is met.

When the preset condition is met, the terminal device performs uplink transmission with the first network device, in other words, the terminal device ignores the NAV set by the first AP, and does not need to consider the channel status indicated by the NAV. Even if the channel status is busy, the terminal device may also perform uplink transmission with the first network device by using the transmission opportunity shared by the first AP. This helps avoid a problem that, because the NAV set by the first AP indicates that the channel is busy, the terminal device cannot respond to the trigger frame sent by the first network device, and helps improve resource utilization.

It should be understood that the steps shown in FIG. 2 are merely examples, and should not constitute any limitation on this embodiment of this application. In another embodiment, the method shown in FIG. 2 may include more or fewer steps. For example, the terminal device may not perform S220, but directly perform S230. To be specific, the terminal device may first determine whether the preset condition is met; and if the preset condition is met, the terminal device may directly perform uplink transmission with the first network device. In addition, a sequence of the steps in the method shown in FIG. 2 is not limited in this application. For example, the terminal device may first perform S220, and then perform S210.

Optionally, three possible designs of the preset condition are as follows:
In a first possible design, the preset condition includes: first indication information is received from the first network device, where the first indication information indicates the terminal device to ignore the NAV set by the first AP, or the first indication information indicates the terminal device to ignore a NAV.

The first indication information may be carried in the trigger frame from the first network device.

The first indication information may indicate the terminal device to ignore the NAV set by the first AP. In other words, even if the NAV set by the first AP indicates that the channel status is busy, the terminal device may also respond to the trigger frame sent by the first network device, and perform uplink transmission with the first network device.

The first indication information may further indicate the terminal device to ignore a NAV. In this case, the terminal device may not only ignore the NAV set by the first AP, but also ignore a NAV set by another AP or station. Even if a current NAV indicates that the channel status is busy, the terminal device may also respond to the trigger frame sent by the first network device, and perform uplink transmission with the first network device.

In an example, the terminal device receives the trigger frame from the second AP, where the trigger frame is used to trigger the terminal device to perform uplink transmission, the trigger frame carries the first indication information, and the first indication information indicates the terminal device to ignore the NAV set by the first AP, or the first indication information indicates the terminal device to ignore a NAV.

In a second possible design, the preset condition includes: a pre-stored MAC address of a TXOP holder is the same as a MAC address of the first AP. The TXOP holder indicates a device that sets the TXOP, in other words, a device that is using the channel for transmission.

In this possible design, the terminal device further needs to determine the MAC address of the first AP.

In a possible implementation, the trigger frame further carries an identifier of the first AP, and the terminal device determines the MAC address of the first AP based on the identifier of the first AP and a pre-stored mapping relationship between the identifier of the first AP and the MAC address of the first AP. The terminal device may receive the mapping relationship between the identifier of the first AP and the MAC address of the first AP from the first network device in advance, and store the mapping relationship, so that after receiving the identifier of the first AP, the terminal device may determine the MAC address of the first AP based on the mapping relationship.

For example, the second AP sends the mapping relationship between the identifier of the first AP and the MAC address of the first AP to the terminal device in advance, so that the terminal device stores the mapping relationship. Alternatively, the mapping relationship may be sent by the first AP to the terminal device, in other words, the first AP sends the mapping relationship between the identifier of the first AP and the MAC address of the first AP to the terminal device in advance, so that the terminal device stores the mapping relationship. It may be understood that, when the mapping relationship is sent by the first AP to the terminal device, the first AP further needs to send the mapping relationship between the identifier of the first AP and the MAC address of the first AP to the second AP, so that the second AP adds the identifier of the first AP to the trigger frame and sends the trigger frame to the terminal device. After receiving the trigger frame from the second AP, the terminal device determines the MAC address of the first AP based on the identifier of the first AP carried in the trigger frame and the mapping relationship. If the MAC address of the first AP is the same as the MAC address of the TXOP holder stored in the terminal device, the terminal device ignores the NAV set by the first AP, and performs uplink transmission with the second AP.

Table 1 shows an example of the mapping relationship between the identifier of the first AP and the MAC address of the first AP. As shown in Table 1, the MAC address of the first AP is in one-to-one correspondence with the identifier of the first AP. It may be understood that a length of the identifier of the first AP may be shorter than a length of the MAC address of the first AP. In this way, that the first network device sends the identifier of the first AP to the terminal device helps reduce signaling overheads.

**Table 1**

| MAC address of the first AP | Identifier of the first AP |
|---|---|
| "xxxxx" | "xx" |

It should be understood that the mapping relationship is not limited to be in a form in the table. For example, the mapping relationship may alternatively be of another data structure, for example, an array, a queue, or a stack. A specific form of the mapping relationship is not limited in this application.

In another possible implementation, the trigger frame may directly carry the MAC address of the first AP. In this way, after receiving the trigger frame, the terminal device may obtain the MAC address of the first AP.

In still another possible implementation, the terminal device obtains the response frame sent by the first network device, where the response frame carries the MAC address of the first AP, the response frame is used to respond to the transmission opportunity sharing frame sent by the first AP, and the transmission opportunity sharing frame indicates the transmission opportunity shared by the first AP with the first network device; and obtains the MAC address of the first AP from the response frame.

The response frame sent by the first network device carries the MAC address of the first AP, and the terminal device may monitor the response frame and obtain the MAC address of the first AP from the response frame.

For example, after receiving the trigger frame from the first network device, the terminal device monitors a CTS frame sent by the second AP or the station in the first network device to the first AP. A receiver address (receiver address, RA) field in the CTS frame carries the MAC address of the first AP. If the CTS frame is detected, the terminal device obtains the MAC address of the first AP, and determines whether the MAC address is the same as the MAC address of the TXOP holder stored in the terminal device. If the MAC address is the same as the MAC address of the TXOP holder, the terminal device may respond to the trigger frame, and perform uplink transmission with the first network device.

In a third possible design, the preset condition includes: the NAV is an intra-BSS NAV.

It may be understood that, it is specified in a protocol that, after receiving the trigger frame, if the terminal device needs to determine whether the channel status is busy or idle, the terminal device may determine only whether a basic NAV is not 0, and does not need to determine whether the intra-BSS NAV is not 0. Therefore, in this application, the NAV set by the first AP is set to the intra-BSS NAV. After receiving the trigger frame, the terminal device may ignore the NAV set by the first AP, and successfully perform uplink transmission with the first network device.

In this design, the terminal device may set the NAV in the following manner: After receiving the radio frame from the first AP, if the radio frame indicates the terminal device to set the NAV, the terminal device further determines whether the first AP is an AP in a pre-stored cooperation set; and if the first AP is the AP in the pre-stored cooperation set, determines the NAV as the intra-BSS NAV.

Optionally, the cooperation set may be indicated by the first network device to the terminal device in advance, so that after receiving the radio frame, the terminal device determines whether a transmit end of the radio frame belongs to the cooperation set. For example, the first network device may send a MAC address of an AP in the cooperation set to the terminal device in advance. The MAC address of the AP in the cooperation set may be carried in a beacon (Beacon) frame sent by the second AP in a broadcast manner, or may be carried in another unicast or multicast management frame. This is not limited in this application.

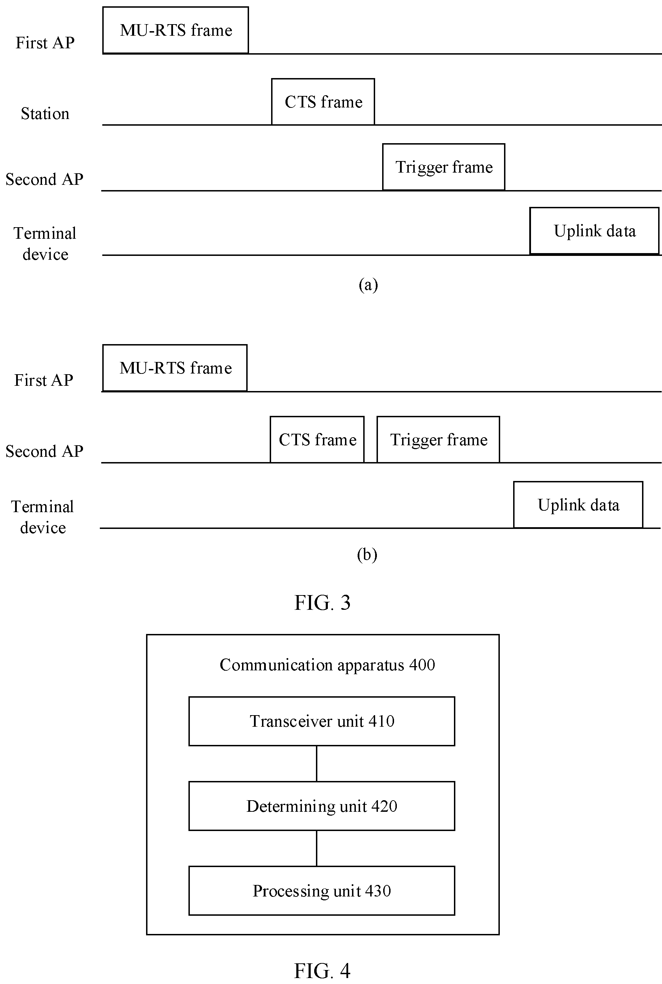

FIG. 3 is a diagram of a sending process of each frame according to an embodiment of this application. In the method shown in FIG. 3, an example in which the transmission sharing frame is an MU-RTS frame and an example in which the response frame is a CTS frame are used.

As shown in (a) in FIG. 3, the first AP sends the MU-RTS frame, and correspondingly, the station in the first network device receives the MU-RTS frame. After receiving the MU-RTS frame, the station in the first network device sends the CTS frame, and indicates, to the second AP in the first network device, that the first AP shares the transmission opportunity with the second AP, so that the second AP sends the trigger frame to the terminal device, to trigger the terminal device to perform uplink transmission. After receiving the trigger frame, the terminal device sends uplink data when the preset condition is met.

As shown in (b) in FIG. 3, the first AP sends the MU-RTS frame, and correspondingly, the second AP in the first network device receives the MU-RTS frame. After receiving the MU-RTS frame, the second AP in the first network device sends the CTS frame, and sends the trigger frame to the terminal device, to trigger the terminal device to perform uplink transmission. After receiving the trigger frame, the terminal device sends uplink data when the preset condition is met.

Based on the foregoing technical solution, after receiving the trigger frame from the first network device, the terminal device obtains the NAV from the first AP. Even if the NAV indicates that the channel status is busy, as long as the preset condition is met, the terminal device may perform uplink transmission with the first network device, in other words, the terminal device may ignore the NAV set by the first AP, and successfully respond to the trigger frame from the first network device. In this way, the terminal device successfully performs uplink transmission with the first network device. This helps improve resource utilization.

FIG. 4 is a block diagram of a communication apparatus 400 according to an embodiment of this application.

In a possible design, the communication apparatus 400 may be configured to implement a function of the terminal device in the method embodiment of FIG. 2, or the apparatus 400 may include a module configured to implement any function or operation of the terminal device in the method embodiment of FIG. 2. The module may be completely or partially implemented by using software, hardware, firmware, or any combination thereof.

For example, when the apparatus 400 is configured to implement the function of the terminal device in the method embodiment of FIG. 2, a transceiver unit 410 may be configured to receive a trigger frame from a first network device, where the trigger frame is used to trigger the apparatus 400 to perform uplink transmission, and the first network device is a network device with which a transmission opportunity is shared in cooperative transmission; a determining unit 420 may be configured to determine a NAV, where the NAV indicates that a channel status is busy, the NAV is set by a first AP, and the first AP is an AP that shares the transmission opportunity with the first network device in cooperative transmission; and a processing unit 430 may be configured to perform uplink transmission with the first network device when a preset condition is met.

In another possible design, the apparatus 400 may be configured to implement a function of the first network device in the method embodiment of FIG. 2, or the apparatus 400 may include a module configured to implement any function or operation of the first network device in the method embodiment of FIG. 2. The module may be completely or partially implemented by using software, hardware, firmware, or any combination thereof.

In an example, when the apparatus 400 is configured to implement the function of the first network device in the method embodiment of FIG. 2, a transceiver unit 410 may be configured to send a trigger frame to a terminal device, where the trigger frame is used to trigger the terminal device to perform uplink transmission, the trigger frame carries first indication information, the first indication information indicates the terminal device to ignore a NAV set by a first AP, the apparatus 400 is an apparatus with which a transmission opportunity is shared in cooperative transmission, and the first AP is an AP that shares the transmission opportunity in cooperative transmission; and the transceiver unit 410 may be further configured to receive uplink data from the terminal device.

In another example, when the apparatus 400 is configured to implement the function of the first network device in the method embodiment of FIG. 2, a transceiver unit 410 may be configured to send a trigger frame to a terminal device, where the trigger frame is used to trigger the terminal device to perform uplink transmission, the trigger frame carries an identifier of a first AP, the identifier of the first AP is used by the terminal device to determine that a NAV stored in the terminal device is a NAV set by the first AP, and the first AP is an AP that shares a transmission opportunity in cooperative transmission; and the transceiver unit 410 may be further configured to receive uplink data from the terminal device.

In still another possible design, the apparatus 400 may be configured to implement a function of the first AP in the method embodiment of FIG. 2, or the apparatus 400 may include a module configured to implement any function or operation of the first AP in the method embodiment of FIG. 2. The module may be completely or partially implemented by using software, hardware, firmware, or any combination thereof.

For example, when the apparatus 400 is configured to implement the function of the first AP in the method embodiment of FIG. 2, a transceiver unit 410 may be configured to send a transmission opportunity sharing frame to a first network device, where the transmission opportunity sharing frame indicates that the apparatus 400 shares a transmission opportunity with a second AP in the first network device, the first network device is a network device with which the transmission opportunity is shared in cooperative transmission, and the apparatus 400 is an apparatus that shares the transmission opportunity in cooperative transmission; and the transceiver unit 410 may be further configured to receive a response frame from the first network device.

For more detailed descriptions of the transceiver unit 410, the determining unit 420, and the processing unit 430, directly refer to related descriptions in the foregoing method embodiment. Details are not described herein.

It should be understood that, in embodiments of this application, division into the units is an example, and is merely logical function division. During actual implementation, another division manner may be used. In addition, functional units in embodiments of this application may be integrated into one processor, each of the units may exist alone physically, or two or more units may be integrated into one unit. The integrated unit may be implemented in a form of hardware, or may be implemented in a form of a software functional module.

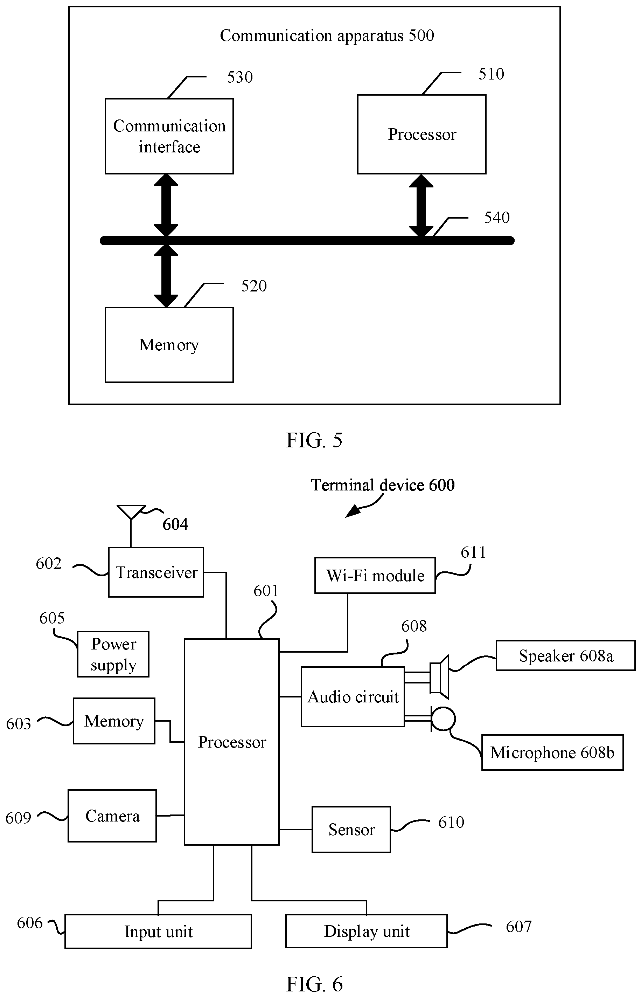

FIG. 5 is another block diagram of a communication apparatus 500 according to an embodiment of this application.

The communication apparatus 500 may be configured to implement the method in the embodiment of FIG. 3. The apparatus 500 may be a chip system. In this embodiment of this application, the chip system may include a chip, or may include a chip and another discrete component.

As shown in FIG. 5, the apparatus 500 may include at least one processor 510, configured to implement the method in the embodiment of FIG. 2.

For example, the processor 510 may be configured to: receive a trigger frame from a first network device, where the trigger frame is used to trigger the apparatus 400 to perform uplink transmission, and the first network device is a network device with which a transmission opportunity is shared in cooperative transmission; determine a NAV, where the NAV indicates that a channel status is busy, the NAV is set by a first AP, and the first AP is an AP that shares the transmission opportunity with the first network device in cooperative transmission; and perform uplink transmission with the first network device when a preset condition is met. For details, refer to detailed descriptions in the method example. Details are not described herein again.

The apparatus 500 may further include at least one memory 520, configured to store program instructions and/or data. The memory 520 is coupled to the processor 510. Couplings in embodiments of this application are indirect couplings or communication connections between apparatuses, units, or modules, may be in electrical, mechanical, or other forms, and are used for information exchange between the apparatuses, units, or modules. The processor 510 may cooperate with the memory 520. The processor 510 may execute the program instructions stored in the memory 520. At least one of the at least one memory may be included in the processor.

The apparatus 500 may further include a communication interface 530, configured to communicate with another device through a transmission medium, so that the apparatus 500 may communicate with the another device. The communication interface 530 may be, for example, a transceiver, an interface, a bus, a circuit, or an apparatus that can implement receiving and sending functions. The processor 510 may receive and send data and/or information through the communication interface 530, and is configured to implement the method in the embodiment of FIG. 2.

A specific connection medium between the processor 510, the memory 520, and the communication interface 530 is not limited in this embodiment of this application. In this embodiment of this application, in FIG. 5, the processor 510, the memory 520, and the communication interface 530 are connected through a bus 540. The bus 540 is represented by a thick line in FIG. 5. A connection manner between other components is merely an example for description, and is not limited thereto. Buses may be classified into an address bus, a data bus, a control bus, and the like. For ease of representation, only one thick line is used to represent the bus in FIG. 5, but this does not mean that there is only one bus or only one type of bus.

FIG. 6 is a diagram of a structure of a terminal device 600 according to an embodiment of this application. The terminal device 600 may be configured to implement the method in the embodiment of FIG. 2, and the terminal device 600 may be applied to the communication system 100 shown in FIG. 1. As shown in FIG. 6, the terminal device 600 includes a processor 601 and a transceiver 602.

Optionally, the terminal device 600 further includes a memory 603. The processor 601, the transceiver 602, and the memory 603 may communicate with each other via an internal connection path, to transfer a control signal and/or a data signal. The memory 603 is configured to store a computer program. The processor 601 is configured to invoke the computer program from the memory 603 and run the computer program, to control the transceiver 602 to receive/send a signal.

Optionally, the terminal device 600 may further include an antenna 604, configured to send, by using a radio signal, uplink data or uplink control signaling that is output by the transceiver 602. Optionally, the terminal device 600 further includes a Wi-Fi module 611, configured to access a wireless network.

The processor 601 and the memory 603 may be integrated into one processing apparatus. The processor 601 is configured to execute program code stored in the memory 603 to implement the foregoing functions. During specific implementation, the memory 603 may alternatively be integrated into the processor 601, or may be independent of the processor 601. The processor 601 may correspond to the processing unit 430 in FIG. 4 or the processor 510 in FIG. 5.

The transceiver 602 may correspond to the transceiver unit 410 in FIG. 4 or the communication interface 530 in FIG. 5. The transceiver 602 may include a receiver (or referred to as a receiver machine or a receiver circuit) and a transmitter (or referred to as a transmitter machine or a transmitter circuit). The receiver is configured to receive a signal, and the transmitter is configured to transmit a signal.

Optionally, the terminal device 600 may further include a power supply 605, configured to supply power to various components or circuits in the terminal device 600.

**In** addition, to implement more functions of the terminal device, the terminal device 600 may further include one or more of an input unit 606, a display unit 607, an audio circuit 608, a camera 609, a sensor 610, and the like, and the audio circuit 608 may further include a speaker 608a, a microphone 608b, and the like.

It should be understood that, the terminal device 600 shown in FIG. 6 can implement the processes related to the terminal device in the method embodiment of FIG. 2. Operations and/or functions of the modules in the terminal device 600 are separately for implementing corresponding procedures in the foregoing method embodiment. For details, refer to the descriptions in the foregoing method embodiment. To avoid repetition, detailed descriptions are properly omitted herein.

This application further provides a chip system. The chip system includes at least one processor, configured to implement the method in the embodiment of FIG. 2.

**In** a possible design, the chip system further includes a memory, the memory is configured to store program instructions and data, and the memory is located inside or outside the processor.

The chip system may include a chip, or may include a chip and another discrete component.

This application further provides a chip. The chip includes a processor and a communication interface. The processor reads, through the communication interface, instructions stored in a memory, to perform the method performed by the first network device, the method performed by the terminal device, or the method performed by the first AP in the embodiment of FIG. 2.

This application further provides a computer program product. The computer program product includes a computer program (which may also be referred to as code or instructions). When the computer program is run, a computer is enabled to perform the method performed by the first network device, the method performed by the terminal device, or the method performed by the first AP in the embodiment of FIG. 2.

This application further provides a computer-readable storage medium. The computer-readable storage medium stores a computer program (which may also be referred to as code or instructions). When the computer program is run, a computer is enabled to perform the method performed by the first network device, the method performed by the terminal device, or the method performed by the first AP in the embodiment of FIG. 2.

This application further provides a communication system, including the terminal device, the first AP, and the first network device described above.

It should be understood that the processor in embodiments of this application may be an integrated circuit chip, and has a signal processing capability. **In** an implementation process, the steps in the method embodiment may be completed by using a hardware integrated logic circuit in the processor or instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the method in combination with hardware of the processor.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these memories and any memory of another appropriate type.

Terms such as "unit" and "module" used in this specification may indicate computer-related entities, hardware, firmware, combinations of hardware and software, software, or software being executed.

A person of ordinary skill in the art may be aware that, various illustrative logical blocks (illustrative logical blocks) and steps (steps) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. **In** several embodiments provided in this application, it should be understood that the disclosed apparatus, device, and method may be implemented in other manners. For example, the described apparatus embodiments are merely examples. For example, division into the modules is merely logical function division and may be other division during actual implementation. For example, a plurality of modules or components may be combined or integrated into another system, or some features may be ignored or not performed. **In** addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, that is, may be located in one position, or may be distributed on a plurality of network modules. Some or all of the modules may be selected based on actual requirements to achieve the objectives of the solutions of embodiments.

**In** addition, functional modules in embodiments of this application may be integrated into one processing module, or each of the modules may exist alone physically, or two or more units may be integrated into one module.

**In** the foregoing embodiments, all or some of the functions of the functional modules may be implemented by using software, hardware, firmware, or any combination thereof. When software is used for implementation, all or some of the functions may be implemented in a form of a computer program product. The computer program product includes one or more computer instructions (programs). When the computer program instructions (programs) are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cooperative transmission method, applied to a terminal device, wherein the method comprises:
receiving a trigger frame from a first network device, wherein the trigger frame is used to trigger the terminal device to perform uplink transmission, and the first network device is a network device with which a transmission opportunity is shared in cooperative transmission;
determining a network allocation vector NAV, wherein the NAV indicates that a channel status is busy, the NAV is set by a first wireless access point AP, and the first AP is an AP that shares the transmission opportunity with the first network device in cooperative transmission; and
performing uplink transmission with the first network device when a preset condition is met.

2. The method according to claim 1, wherein the preset condition comprises:
first indication information is received from the first network device, wherein the first indication information indicates the terminal device to ignore the NAV set by the first AP, or the first indication information indicates the terminal device to ignore a NAV.

3. The method according to claim 1, wherein the preset condition comprises:
a pre-stored medium access control MAC address of a transmission opportunity holder TXOP holder is the same as a MAC address of the first AP.

4. The method according to claim 3, wherein the method further comprises:
determining the MAC address of the first AP.

5. The method according to claim 4, wherein the trigger frame further carries an identifier of the first AP; and
the determining the MAC address of the first AP comprises:
determining the MAC address of the first AP based on the identifier of the first AP and a pre-stored mapping relationship between the identifier of the first AP and the MAC address of the first AP.

6. The method according to claim 4, wherein the determining the MAC address of the first AP comprises:
obtaining a response frame sent by the first network device, wherein the response frame carries the MAC address of the first AP, the response frame is used to respond to a transmission opportunity sharing frame sent by the first AP, and the transmission opportunity sharing frame indicates that the first AP shares the transmission opportunity with the first network device; and
obtaining the MAC address of the first AP from the response frame.

7. The method according to claim 6, wherein the first network device comprises a second AP, or the first network device comprises a second AP and a station.

8. The method according to any one of claims 1 to 7, wherein the transmission opportunity sharing frame sent by the first AP to the first network device is a multi-user request to send MU-RTS frame, the MU-RTS frame comprises a preset field, and the preset field indicates that the first AP shares the transmission opportunity with the second AP in the first network device.

9. The method according to claim 1, wherein the preset condition comprises:
the NAV is an intra-basic service set intra-BSS NAV.

10. The method according to claim 9, wherein the method further comprises:
receiving a radio frame from the first AP, wherein the radio frame indicates the terminal device to set the NAV; and
when the first AP is an AP in a pre-stored cooperation set, determining the NAV as the intra-BSS NAV, wherein the cooperation set comprises an AP in cooperative transmission.

11. A cooperative transmission method, applied to a first network device, wherein the method comprises:
sending a trigger frame to a terminal device, wherein the trigger frame is used to trigger the terminal device to perform uplink transmission, the trigger frame carries first indication information, the first indication information indicates the terminal device to ignore a NAV set by a first wireless access point AP, the first network device is a network device with which a transmission opportunity is shared in cooperative transmission, and the first AP is an AP that shares the transmission opportunity in cooperative transmission; and
receiving uplink data from the terminal device.

12. The method according to claim 11, wherein the first indication information further indicates the terminal device to ignore a NAV.

13. A cooperative transmission method, applied to a first network device, wherein the method comprises:
sending a trigger frame to a terminal device, wherein the trigger frame is used to trigger the terminal device to perform uplink transmission, the trigger frame carries an identifier of a first wireless access point AP, the identifier of the first AP is used by the terminal device to determine that a NAV stored in the terminal device is a NAV set by the first AP, the first network device is a network device with which a transmission opportunity is shared in cooperative transmission, and the first AP is an AP that shares the transmission opportunity in cooperative transmission; and
receiving uplink data from the terminal device.

14. A cooperative transmission method, applied to a first wireless access point AP, wherein the method comprises:
sending a transmission opportunity sharing frame to a first network device, wherein the transmission opportunity sharing frame indicates that the first AP shares a transmission opportunity with a second AP in the first network device, the first network device is a network device with which the transmission opportunity is shared in cooperative transmission, and the first AP is an AP that shares the transmission opportunity in cooperative transmission; and
receiving a response frame from the first network device.

15. A communication apparatus, comprising:
a transceiver unit, configured to receive a trigger frame from a first network device, wherein the trigger frame is used to trigger the communication apparatus to perform uplink transmission, and the first network device is a network device with which a transmission opportunity is shared in cooperative transmission;
a determining unit, configured to determine a network allocation vector NAV, wherein the NAV indicates that a channel status is busy, the NAV is set by a first wireless access point AP, and the first AP is an AP that shares the transmission opportunity with the first network device in cooperative transmission; and
a processing unit, configured to perform uplink transmission with the first network device when a preset condition is met.

16. The apparatus according to claim 15, wherein the preset condition comprises:
first indication information is received from the first network device, wherein the first indication information indicates the communication apparatus to ignore the NAV set by the first AP, or the first indication information indicates the communication apparatus to ignore a NAV.

17. The apparatus according to claim 15, wherein the preset condition comprises:
a pre-stored medium access control MAC address of a transmission opportunity holder TXOP holder is the same as a MAC address of the first AP.

18. The apparatus according to claim 17, wherein the processing unit is further configured to:
determine the MAC address of the first AP.

19. The apparatus according to claim 18, wherein the trigger frame further carries an identifier of the first AP, and the processing unit is specifically configured to:
determine the MAC address of the first AP based on the identifier of the first AP and a pre-stored mapping relationship between the identifier of the first AP and the MAC address of the first AP.

20. The apparatus according to claim 18, wherein the processing unit is specifically configured to:
obtain a response frame sent by the first network device, wherein the response frame carries the MAC address of the first AP, the response frame is used to respond to a transmission opportunity sharing frame sent by the first AP, and the transmission opportunity sharing frame indicates that the first AP shares the transmission opportunity with the first network device; and
obtain the MAC address of the first AP from the response frame.

21. The apparatus according to claim 15, wherein the preset condition comprises:
the NAV is an intra-basic service set intra-BSS NAV.

22. The apparatus according to claim 21, wherein the transceiver unit is further configured to receive a radio frame from the first AP, wherein the radio frame indicates the communication apparatus to set the NAV; and
the processing unit is further configured to: when the first AP is an AP in a pre-stored cooperation set, determine the NAV as the intra-BSS NAV, wherein the cooperation set comprises an AP in cooperative transmission.

23. A communication apparatus, comprising:
a transceiver unit, configured to send a trigger frame to a terminal device, wherein the trigger frame is used to trigger the terminal device to perform uplink transmission, the trigger frame carries first indication information, the first indication information indicates the terminal device to ignore a NAV set by a first wireless access point AP, the communication apparatus is a network device with which a transmission opportunity is shared in cooperative transmission, and the first AP is an AP that shares the transmission opportunity in cooperative transmission, wherein
the transceiver unit is further configured to receive uplink data from the terminal device.

24. A communication apparatus, comprising:
a transceiver unit, configured to send a trigger frame to a terminal device, wherein the trigger frame is used to trigger the terminal device to perform uplink transmission, the trigger frame carries an identifier of a first wireless access point AP, the identifier of the first AP is used by the terminal device to determine that a NAV stored in the terminal device is a NAV set by the first AP, the communication apparatus is a network device with which a transmission opportunity is shared in cooperative transmission, and the first AP is an AP that shares the transmission opportunity in cooperative transmission, wherein
the transceiver unit is further configured to receive uplink data from the terminal device.

25. A communication apparatus, comprising:
a transceiver unit, configured to send a transmission opportunity sharing frame to a first network device, wherein the transmission opportunity sharing frame indicates that the apparatus shares a transmission opportunity with a second wireless access point AP in the first network device, the first network device is a network device with which the transmission opportunity is shared in cooperative transmission, and the apparatus is an apparatus that shares the transmission opportunity in cooperative transmission, wherein
the transceiver unit is further configured to receive a response frame from the first network device.

26. A communication apparatus, comprising a processor and a memory, wherein
the memory is configured to store a computer program; and
the processor is configured to invoke the computer program, to enable the communication apparatus to perform the method according to any one of claims 1 to 14.

27. A computer-readable storage medium, wherein the storage medium stores a computer program or instructions; and when the computer program or the instructions are executed by a computer, the method according to any one of claims 1 to 14 is implemented.

28. A chip, wherein the chip comprises a processor and a communication interface; and the processor reads, through the communication interface, instructions stored in a memory, to perform the method according to any one of claims 1 to 14.
